# EUROPÄISCHE PATENTSCHRIFT

(11) **EP 3 452 530 B1**
(45) Veröffentlichungstag und Bekanntmachung des Hinweises auf die Patenterteilung: **30.09.2020**
(21) Anmeldenummer: 17723314.5
(22) Anmeldetag: 03.05.2017
(51) Int. Cl.: C08G 64/06, B29C 67/00, C08G 64/12, C08G 64/18, B33Y 80/00, B33Y 70/00, B33Y 10/00, B33Y 40/00

(54) **COPOLYCARBONAT ALS STÜTZMATERIAL IM 3D-DRUCK**
COPOLYCARBONATE AS SUPPORT MATERIAL FOR 3D PRINTING
COPOLYCARBONATE EN TANT QUE MATERIAU SUPPORT POUR L'IMPRESSION EN 3D

(30) Priorität: 04.05.2016 EP 16168220
(43) Veröffentlichungstag der Anmeldung: 13.03.2019
(73) Patentinhaber: Covestro Intellectual Property GmbH & Co. KG, 51373 Leverkusen (DE)
(72) Erfinder: HUNGERLAND, Tim, 51061 Köln (DE); ROTHE, Matthias, 51377 Leverkusen (DE); WEHRMANN, Rolf, 47800 Krefeld (DE); HORN, Klaus, 41540 Dormagen (DE); SCHIRWITZ, Christopher, 51375 Leverkusen (DE); CASSEL, Tanja, 47167 Duisburg (DE)
(74) Vertreter: Levpat
(86) Internationale Anmeldenummer: PCT/EP2017/060453
(87) Internationale Veröffentlichungsnummer: WO 2017/191150

(56) Entgegenhaltungen:
- WO-A1-2004/003823
- WO-A2-2015/052106
- DE-A1-102006 046 330
- US-A- 5 145 911
- US-A1- 2016 068 678

## Beschreibung

Die vorliegende Erfindung betrifft ein Verfahren zur Herstellung eines dreidimensionalen Zielobjektes mittels Fused Deposition Modeling unter Verwendung eines Stützmaterials und ein Formteil, aufweisend eine Vielzahl von Schichten aus Stützmaterial und eine Vielzahl von Schichten aus Druckmaterial.

Beim Fused Deposition Modeling (FDM), auch Fused Filament Fabrication (FFF), einem Verfahren aus dem Bereich Rapid Prototyping, wird ein dreidimensionales (3D) Objekt schichtweise aus einem schmelzfähigen Kunststoff aufgebaut. Üblicherweise wird hierzu ein 3D-Drucker verwendet. Schicht für Schicht wird das Objekt gedruckt. Zunächst wird ein Raster von Punkten aus dem aufgeschmolzenen Material auf einer Fläche aufgetragen. Die Auftragung des aufgeschmolzenen, üblicherweise als Filament eingesetzten Druckmaterials erfolgt in der Regel durch Extrudieren mittels einer Düse, gefolgt von dem Aushärten des Materials durch Abkühlen an der gewünschten Position. Dabei wird üblicherweise zunächst die erste Schicht wie im herkömmlichen 2D-Druckverfahren aufgebracht, indem Zeile für Zeile der aufzutragenden Schicht aufgebracht wird. Anschließend erfolgt das Aufbringen der nächsten Schicht auf analoge Weise.

Ein mittels 3D-Druck zu realisierendes Formteil, d.h. das Zielobjekt, kann Geometrien wie z.B. Unterschneidungen, Überhänge und beliebige Freiformflächen aufweisen. Diese geometrisch kritischen Strukturen lassen sich nicht einfach durch das Verdrucken des Baumaterials, auch Druckmaterial genannt, realisieren, sondern erfordern den Einsatz von sogenanntem Stützmaterial. Während das Druckmaterial zur Bildung des Zielobjektes dient, dient das Stützmaterial zur mechanischen Verstärkung, d.h. einem Abstützen von freitragenden Flächen und Gebilden als Ausformungen des Bauteils durch Ausbildung von Stützstrukturen. Das Stützmaterial wird beim Aufbau des eigentlichen dreidimensionalen Objektes mit gedruckt und muss nach dem Drucken wieder entfernt werden. Dabei muss sich das Stützmaterial selbstverständlich vom 3D-Objekt ablösen lassen, ohne dass dieses dabei beschädigt wird. Hierzu sind grundsätzlich zwei Verfahren bekannt: das mechanische Entfernen und das Auflösen des Stützmaterials.

Das mechanische Entfernen erfolgt durch vorsichtiges mechanisches Herausbrechen, wozu ggf. Werkzeuge zur Hilfe genommen werden.

Das Auflösen des Stützmaterials ist die schonendere Methode. Zum Auflösen des Stützmaterials ist ein geeignetes Lösungsmittel einzusetzen. Auf diese Weise können auch schwer zugängliche Stellen des Bauteils von Stützmaterial befreit werden. Gegenüber einer mechanischen Ablösung des Stützmaterials werden glattere Objekte mit schärferen bzw. feineren Kanten erhalten. Das Stützmaterial lässt sich beim Ablösen mittels Lösungsmittel vollständig entfernen. Die Entfernung des Stützmaterials lässt sich einfacher und in kürzerer Zeit durchführen. Umständliche mechanische Ablösevorgänge sind überflüssig. Zusätzlich besteht die Möglichkeit, einen automatisierten Prozess zu realisieren, in dem das 3D-Objekt zunächst unter Verwendung von Druck- und Stützmaterial gefertigt wird und das Stützmaterial anschließend im Lösungsmittel vom Zielobjekt entfernt werden kann.

Die Suche nach geeigneten Stützmaterialien, die zur Entfernung mittels Auflösen geeignet sind, gestaltet sich in der unüberschaubaren Menge bereits bekannter Materialien jedoch als schwierig, da verschiedene Anforderungen hinsichtlich der Eignung als zu druckendes Material als auch als vom Druckmaterial mittels Lösungsmittel abzulösendes Material zu erfüllen sind. Das Stützmaterial sollte eine Schmelztemperatur aufweisen, welche der des Druckmaterials ähnelt. Bei einer zu hohen Differenz der Schmelztemperaturen würde sonst das bereits aufgedruckte Material mit der niedrigeren Schmelztemperatur wieder teilweise aufschmelzen. Hierdurch könnte die Adhäsion des Stützmaterials am Druckmaterial im gedruckten Objekt, von dem das Stützmaterial zu entfernen ist, zu stark sein. Auch könnten die Eigenschaften des Druckmaterials negativ beeinflusst werden. Die Schwindung beider Materialien sollte vergleichbar sein.

Für das Ablösen des Stützmaterials ist es zum einen entscheidend, dass sich das abzulösende Stützmaterial gut im vorgesehenen Lösungsmittel löst. Eine rückstandslose Entfernung des Lösungsmittels führt zu optimalen Ergebnissen. Das Stützmaterial muss sich zumindest so stark anlösen lassen, dass eine Ablösung vom verwendeten Druckmaterial erfolgen kann, wobei das verwendete Druckmaterial selbst durch das Lösungsmittel nicht angegriffen werden darf. Der Zustand des gedruckten Druckmaterials, insbesondere hinsichtlich der vorliegenden Geometrie als auch der Oberflächenbeschaffenheit, sollte erhalten bleiben. Wird das Stützmaterial auf- bzw. abgelöst, gleichzeitig aber das Druckmaterial angelöst, aufgequellt, eingetrübt oder farblich verändert, z.B. durch Bildung weißer Schlieren, liegt eine nicht geeignete Kombination aus Druckmaterial, Stützmaterial und Lösungsmittel vor.

Als Druckmaterial im FDM-Verfahren werden üblicherweise Formwachse und Thermoplaste, z.B. Polyethylen (PE), Polypropylen (PP), Polylactid (PLA), Acrylnitril-Butadien-Styrol (ABS), glycolmodifiziertes Polyethylenterephthalat (PETG) oder aber auch thermoplastische Elastomere eingesetzt.

Für Thermoplasten mit niedrigen Schmelztemperaturen, z.B. PLA (150-190°C), bis moderaten Schmelztemperaturen, z.B. ABS (210-240°C), als Druckmaterialien sind bereits geeignete lösliche Stützmaterialien identifiziert, etwa High-impact-polystyrene (HIPS) oder Polyvinylalkohol (PVA). Generell sollte die Verarbeitungstemperatur der Filamente deutlich höher gewählt werden als deren Schmelztemperatur. So sind z.B. für PLA Düsentemperaturen von 180 - 210 °C sinnvoll.

Für Polymere mit höherer Schmelz- bzw. Verarbeitungstemperatur beim FDM-Drucken, beispielsweise thermoplastisches Polyetheretherketon (PEEK), Polyetherimid (PEI), Polyamide (PA), Polybutylenterepthalat (PBT), Polyethylenterephthalat (PET) oder auch Polycarbonat/Polybutylenterephthalat-Blends (PC/PBT), wurden bisher erst wenige geeignete Stützmaterialien identifiziert, die zudem verschiedene Nachteile haben. Für Druckmaterialien mit niedrigen Schmelztemperaturen geeignete Stützmaterialien sind nicht für solche mit hohen Schmelztemperaturen geeignet, da das bereits gedruckte Stützmaterial beim Drucken des Druckmaterials wieder zusammenschmelzen würde.

Es werden zwar bereits Polymere mit höherer Schmelz- bzw. Verarbeitungstemperatur als Stützmaterialien im 3D-Druck verwendet, etwa Polyetheretherketon (PEEK), Polyethersulfon (PES), welches z.B. unter dem Namen Ultem von der Firma Stratasys erhältlich ist, oder Polyetherimid; diese Materialien müssen jedoch mechanisch abgetrennt werden.

Daneben sind lösliche Stützmaterialien bekannt.

So beschreibt die US 2013/317164 A1 Maleinsäureanhydrid-Copolymere als Stützmaterial. Dieses Stützmaterial ist in alkalisch wässriger Lösung löslich. Das hier beschriebene Stützmaterial ist allerdings aufgrund seiner Verarbeitungstemperatur nur für den Druck mit ABS geeignet. Generell sollten die Verarbeitungstemperaturen von Druck- und Stützmaterial nicht sehr stark voneinander abweichen oder zumindest eine gute Temperaturbeständigkeit beider Materialien gegeben sein.

Die US 2015/028523 A1 beschreibt Polyglycolsäure als Stützmaterial mit einer HDT-A von 168°C und einer Schmelztemperatur von 220°C. Dieses Stützmaterial wird in Kombination mit einem Polysulfon als Druckmaterial gedruckt, welches eine HDT-A von 174°C, eine Glasübergangstemperatur Tg von 185°C und eine Schmelztemperatur von 420°C aufweist. Es wird aber beschrieben, dass höhere Temperaturen als 300-330°C das Stützmaterial bereits zersetzen. Zudem ist eine Entfernung des Stützmaterials mit alkalisch wässriger Lösung erforderlich.

Als hochtemperaturstabiles Stützmaterial ist aus der WO 2015/175682 A1 auch ein Carbonsäure-funktionalisiertes Copolymer bekannt, welches sich allerdings ebenfalls nur in alkalisch wässriger Lösung auflösen lässt.

Daneben ist auch ein wasserlösliches Stützmaterial bekannt, Polyvinylalkohol (Tg = 85°C) der Firma 3D Systems, welches laut Hersteller nur kompatibel mit Nylon und PLA ist. Die hohe Tendenz zur Wasser-/Feuchtigkeitsaufnahme bei wasserlöslichen Materialien ist jedoch auch nachteilig, da die Lagerung solcher Materialien unter Feuchtigkeitsausschluss und ausreichende Trocknung vor dem Verdrucken nötig sind.

Die US 2016/068678 A1 und die WO 2004/003823 A1 beschreiben ebenfalls Verfahren zur Herstellung dreidimensionaler Zielobjekte mittels dem FDM-Verfahren.

Die aus dem Stand der Technik bekannten löslichen Stützmaterialien sind üblicherweise nicht über einen langen Zeitraum bei hoher Temperatur stabil und/oder erfordern eine Entfernung in alkalisch wässriger Lösung, welche viele als Druckmaterialien grundsätzlich geeignete Polymere angreift.

Aufgabe war es daher, ein Stützmaterial zu finden, welches auch bei besonders hohen Verarbeitungstemperaturen ≥ 250°C, bevorzugt ≥ 300°C, insbesondere ≥ 330°C stabil ist, so dass dieses mit Druckmaterialien mit besonders hoher Verarbeitungstemperatur, beispielsweise mit PEEK mit einer Verarbeitungstemperatur von 370-400°C, verwendet werden kann, aus denen 3D-Objekte mit hoher Wärmeformbeständigkeit resultieren, und welches sich durch Auflösung, möglich mit einem anderen Lösungsmittel als einer wässrigen alkalischen Lösung, entfernen lässt.

Überraschenderweise wurde nun gefunden, dass Zusammensetzungen auf Basis von hochtemperaturstabilem Copolycarbonat für den Einsatz als Stützmaterial im 3D-Druck (FDM), insbesondere in Kombination mit den vorgenannten Druckmaterialien mit hohen Schmelz- bzw. Verarbeitungstemperaturen, d.h. ≥ 250°C, bevorzugt ≥ 300°C, insbesondere ≥ 330°C geeignet sind. Unter "hochtemperaturstabil" wird erfindungsgemäß ein Copolycarbonat verstanden, das eine Vicat-Temperatur (VST/B 120; ISO 306:2013) von mindestens 150°C, bevorzugt von über 150°C, weiter bevorzugt von mindestens 175°C, noch weiter bevorzugt von mindestens 180°C, besonders bevorzugt von mindestens 200°C, bevorzugt bis 230°C, aufweist.

Ein entsprechendes Copolycarbonat ist beispielsweise unter der Bezeichnung "APEC®" von der Covestro Deutschland AG erhältlich. Es handelt sich dabei um ein Copolycarbonat, enthaltend eine oder mehrere Monomereinheiten der Formel (1a) 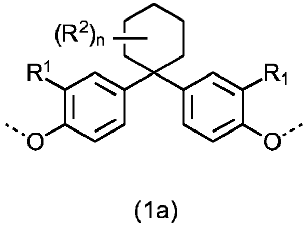 in der
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht.

Alternativ handelt es sich um ein Copolycarbonat, enthaltend eine oder mehrere Monomereinheiten der Formeln (1b), (1c), (1d) und/oder (1e), welche nachfolgend gezeigt sind.

Bevorzugt enthält das Copolycarbonat aber Monomereinheiten der allgemeinen Formel (1a).

Gegenstand der Erfindung ist daher ein Verfahren zur Herstellung eines dreidimensionalen Objektes mittels Fused Deposition Modeling unter Verwendung eines Stützmaterials, wobei ein Lösungsmittel zum Entfernen des Stützmaterials verwendet wird, dadurch gekennzeichnet, dass als Stützmaterial eine Zusammensetzung auf Basis eines Copolycarbonats, das eine Vicat-Temperatur (VST/B 120), bestimmt nach ISO 306:2013, von mindestens 150°C, bevorzugt von mehr als 150°C, weiter bevorzugt von mindestens 175°C aufweist,
und wobei das Copolycarbonateine oder mehrere Monomereinheiten, ausgewählt aus der Gruppe, bestehend aus den Struktureinheiten der allgemeinen Formeln (1a), (1b), (1c), (1d) 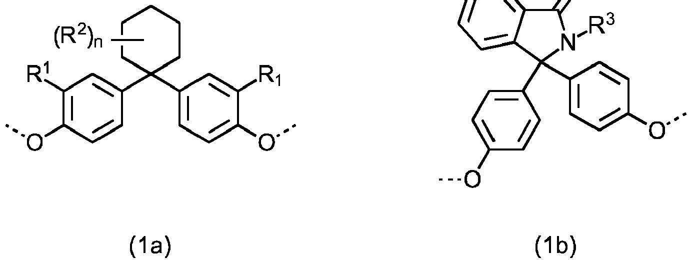 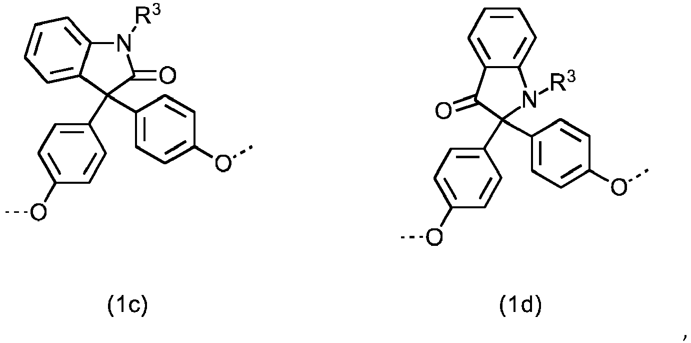 in denen
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht und
R³ für einen C₁- bis C₄-Alkylrest, Aralkylrest oder Arylrest, bevorzugt für einen Methylrest oder Phenylrest, ganz besonders bevorzugt für einen Methylrest, steht,
und/oder
eine oder mehrere Monomereinheiten eines Siloxans der allgemeinen Formel (1e) 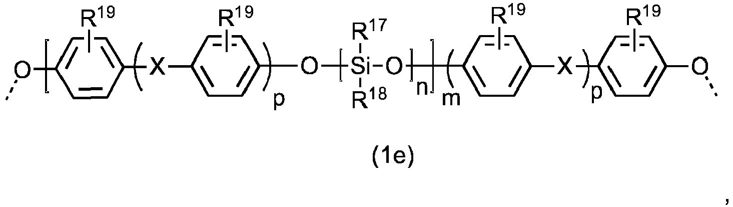 in der
R¹⁹ für Wasserstoff, Cl, Br oder einen C₁- bis C₄-Alkylrest, vorzugsweise für Wasserstoff oder einen Methylrest, besonders bevorzugt für Wasserstoff, steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest, bevorzugt jeweils für einen Methylrest, stehen und wobei
X eine Einfachbindung, -CO-, -O-, ein C₁- bis C₆-Alkylenrest, ein C₂- bis C₅-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, wobei X bevorzugt eine Einfachbindung, ein C₁- bis C₅-Alkylenrest, ein C₂- bis C₅-Alkylidenrest, ein C₅- bis C₁₂-Cycloalkylidenrest, -O- oder -CO- ist, weiter bevorzugt eine Einfachbindung, ein Isopropylidenrest, ein C₅- bis C₁₂-Cycloalkylidenrest oder -O-ist, ganz besonders bevorzugt ein Isopropylidenrest, ist,
n eine Zahl von 1 bis 500, vorzugsweise von 10 bis 400, besonders bevorzugt von 10 bis 100, ganz besonders bevorzugt von 20 bis 60, ist,
m eine Zahl von 1 bis 10, bevorzugt von 1 bis 6, besonders bevorzugt von 2 bis 5, ist,
p 0 oder 1, bevorzugt 1, ist, enthält
und der Wert von n mal m vorzugsweise zwischen 12 und 400, weiter bevorzugt zwischen 15 und 200 liegt,
wobei das Siloxan bevorzugt mit einem Polycarbonat in Gegenwart eines organischen oder anorganischen Salzes einer schwachen Säure mit einem pK_{A} Wert von 3 bis 7 (25°C) umgesetzt wird,
und als Druckmaterial ein Polyester, ein Polyamid, ein PC/Polyester-Blend und/oder ein Polyaryletherketon verwendet wird und
als Lösungsmittel zum Entfernen des Stützmaterials THF (Tetryhydrofuran), alleine oder in Mischung, verwendet wird, wenn das Copolycarbonat Monomereinheiten der Formel (1b), (1c), (1d) und/oder (1e) enthält und/oder die Vicat-Temperatur (VST/B120), bestimmt nach ISO 306:2013, unter 175°C beträgt.

Copolycarbonate mit Monomereinheiten der Formel (1e) und insbesondere auch deren Herstellung sind in der WO 2015/052106 A2 beschrieben.

Unter Polycarbonaten und Copolycarbonaten werden erfindungsgemäß insbesondere aromatische Polycarbonate bzw. Copolycarbonate verstanden.

**C₁- bis C₄-Alkyl** steht im Rahmen der Erfindung beispielsweise für Methyl, Ethyl, n-Propyl, iso-Propyl, n-Butyl, sec.-Butyl, tert.-Butyl, **C₁- bis C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁- bis C₁₀-Alkyl** darüber hinaus beispielsweise für n-Heptyl und n-Octyl, Pinakyl, Adamantyl, die isomeren Menthyle, n-Nonyl, n-Decyl, **C₁- bis C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl**rest steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆- bis C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Unter "Zusammensetzungen auf Basis von Copolycarbonat" werden im Sinne der vorliegenden Erfindung solche Zusammensetzungen verstanden, welche mindestens 50 Gew.-% Copolycarbonat, bevorzugt mindestens 60 Gew.-%, besonders bevorzugt mindestens 75 Gew.-%, ganz besonders bevorzugt mindestens 85 Gew.-% Copolycarbonat enthalten. Es werden hierunter auch die Copolycarbonate ohne weitere Additive verstanden. Hinsichtlich der Additive, die in den Zusammensetzungen auf Basis von Copolycarbonat enthalten sein können, gilt dasselbe wie an späterer Stelle zu den Druckmaterial-Zusammensetzungen beschrieben.

Die Monomereinheit(en) der allgemeinen Formel (1a) führt man über ein oder mehrere entsprechenden Diphenole der allgemeinen Formel (1a') ein: 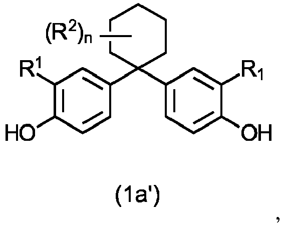 in der
R¹ für Wasserstoff oder einen C₁- bis C₄-Alkylrest, bevorzugt Wasserstoff,
R² für einen C₁- bis C₄-Alkylrest, bevorzugt einen Methylrest, und
n für 0, 1, 2 oder 3, bevorzugt 3, stehen.

Die Diphenole der Formel (1a') und ihr Einsatz in Homopolycarbonaten sind in der Literatur bekannt (DE 3918406 A1).

Besonders bevorzugt ist 1,1-Bis-(4-hydroxyphenyl)-3,3,5-trimethylcyclohexan (Bisphenol TMC) mit der Formel (1a"):

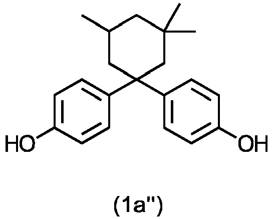

Die Copolycarbonate mit Monomereinheiten der allgemeinen Formeln (1b), (1c) und/oder (1d) weisen eine hohe Wärmeformbeständigkeit und eine geringe thermische Schwindung auf. Die Vicat-Temperatur bei erfindungsgemäß eingesetzten Copolycarbonaten liegt üblicherweise zwischen 175°C und 230°C.

Die Monomereinheit(en) der allgemeinen Formel (1b), (1c) und/oder (1d) führt man über ein oder mehrere entsprechenden Diphenole der allgemeinen Formeln (1b'), (1c') und (1d') ein: 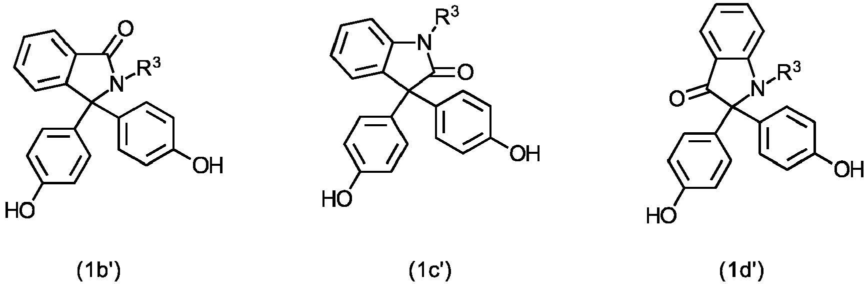 in denen R³ für einen C₁- bis C₄-Alkylrest, Aralkylrest oder Arylrest, bevorzugt für einen Methylrest oder Phenylrest, ganz besonders bevorzugt für einen Methylrest, steht.

Neben einer oder mehreren Monomereinheiten der Formel (1a), (1b), (1c), (1d) und/oder (1e) können die erfindungsgemäß als Stützmaterial eingesetzten Copolycarbonate ein oder mehrere Monomereinheit(en) der Formel (2) aufweisen: 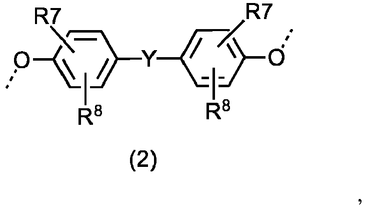 in der
R⁷ und R⁸ unabhängig voneinander für H, einen C₁- bis C₁₈-Alkylrest, einen C₁- bis C₁₈-Alkoxyrest, Halogen wie Cl oder Br oder für jeweils einen gegebenenfalls substituierten Arylrest oder Aralkylrest, bevorzugt für H oder einen C₁- bis C₁₂-Alkylrest, besonders bevorzugt für H oder einen C₁- bis Cs-Alkylrest und ganz besonders bevorzugt für H oder einen Methylrest, stehen, und
Y für eine Einfachbindung, -SO₂-, -CO-, -O-, -S-, einen C₁- bis C₆-Alkylenrest oder C₂- bis C₅-Alkylidenrest, ferner für einen C₆- bis C₁₂-Arylenrest, welches gegebenenfalls mit weiteren Heteroatome enthaltenden aromatischen Ringen kondensiert sein kann, steht.

Die Monomereinheit(en) der allgemeinen Formel (2) führt man über ein oder mehrere entsprechende Diphenole der allgemeinen Formel (2a) ein: 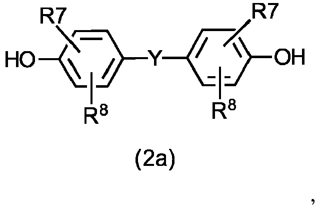 wobei R⁷, R⁸ und Y jeweils die bereits im Zusammenhang mit der Formel (2) erwähnte Bedeutung haben.

Beispielhaft werden für die Diphenole der Formel (2a), die neben den Diphenolen der Formel (1a'), (1b'), (1c') und/oder (1d') eingesetzt werden können, Hydrochinon, Resorcin, Dihydroxybiphenyle, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen und auch α,ω- Bis-(hydroxyphenyl)-polysiloxane genannt.

Bevorzugte Diphenole der Formel (2a) sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan und 2,2-Bis-(3,5-dibrom-4-hydroxyphenyl)-propan.

Ganz besonders bevorzugt sind Verbindungen der allgemeinen Formel (2b), 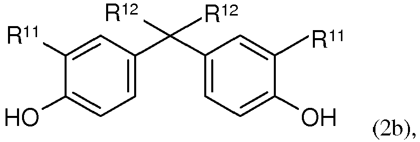 in der
R¹¹ für H, lineare oder verzweigte C₁- bis C₁₀ -Alkylreste, bevorzugt lineare oder verzweigte C₁- bis C₆ -Alkylreste, besonders bevorzugt für lineare oder verzweigte C₁- bis C₄-Alkylreste, ganz besonders bevorzugt für H oder einen C₁-Alkylrest (Methylrest), steht und
R¹² für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für einen C₁-Alkylrest (Methylrest), steht.

Hierbei ist insbesondere das Diphenol (2c) ganz besonders bevorzugt.

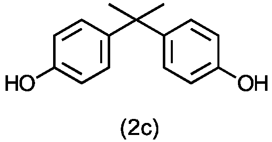

Die Diphenole der allgemeinen Formeln (2a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Gesamtanteil der Monomereinheiten der Formeln (1a), (1b), (1c) und (1d) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Bevorzugt leiten sich die Diphenolateinheiten der Copolycarbonate gemäß Komponente A von Monomeren mit den allgemeinen Strukturen der oben beschriebenen Formeln (1a'), weiter bevorzugt (1a"), und (2a), ganz besonders bevorzugt (2c), ab.

In einer anderen bevorzugten Ausführungsform der erfindungsgemäßen Zusammensetzung leiten sich die Diphenolateinheiten der Copolycarbonate gemäß Komponente A von Monomeren mit den allgemeinen Strukturen der oben beschriebenen Formeln (2a) und (1b'), (1c') und/oder (1d') ab.

Ein bevorzugtes Copolycarbonat ist aufgebaut aus 17 bis 62 Gew.-% Bisphenol A und 38 bis 83 Gew.-%, weiter bevorzugt 50 bis 70 Gew.-%, Comonomer der allgemeinen Formel (1b), (1c) und/oder (1d), wobei sich die Mengen von Bisphenol A und Comonomer der allgemeinen Formeln (1b), (1c) und/oder (1d) zu 100 Gew.-% ergänzen.

Der Anteil der Monomereinheiten der Formel (1a), bevorzugt von Bisphenol TMC, im Copolycarbonat beträgt vorzugsweise 10 - 95 Gew.-%, weiter bevorzugt 30 bis 85 Gew.-%, besonders bevorzugt 30 bis 67 Gew.-%. Bei 30 Gew.-% und mehr Bisphenol TMC liegt die Vicat-Temperatur (VST/B 120; ISO 306:2013) des Copolycarbonats bei über 175°C. Dabei wird als Monomer der Formel (2) bevorzugt Bisphenol A eingesetzt, dessen Anteil bevorzugt 15 bis 56 Gew.-%, beträgt. Besonders bevorzugt ist das Copolycarbonat aus den Monomeren Bisphenol TMC und Bisphenol A aufgebaut.

Die erfindungsgemäß als Stützmaterial verwendeten Copolycarbonate weisen bevorzugt eine Vicat-Erweichungstemperatur, bestimmt nach ISO 306:2013, von 150 bis 230°C, bevorzugt von 155 bis 225°C, noch weiter bevorzugt von 160°C bis 220°C, besonders bevorzugt 175°C bis 220 °C, ganz besonders bevorzugt von 180°C bis 218°C, auf.

Die Copolycarbonate können als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

Die relative Lösungsviskosität der Copolycarbonate, bestimmt nach ISO 1628-4:1999, liegt bevorzugt im Bereich von = 1,15 - 1,35.

Die gewichtsmittleren Molmassen M_{w} der Copolycarbonate betragen vorzugsweise 15.000 bis 40.000 g/mol, besonders bevorzugt 17.000 bis 36.000 g/mol, ganz besonders bevorzugt 17.000 bis 34.000 g/mol, und werden mittels GPC in Methylenchlorid gegen eine Polycarbonat-Kalibrierung bestimmt.

### Herstellungsverfahren

Bevorzugte Herstellungsverfahren der Copolycarbonate sind das Phasengrenzflächenverfahren und das Schmelzeumesterungsverfahren. In einer bevorzugten Ausführungsform erfolgt die Herstellung nach dem Schmelzeumesterungsverfahren.

Zur Gewinnung hochmolekularer Copolycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Als Verzweiger können geringe Mengen, vorzugsweise Mengen zwischen 0,05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan (THPE) und Bis-(3-methyl-4-hydroxyphenyl)-2-oxo-2,3-dihydroindol eingesetzt werden. Bevorzugt werden Isatinbiskresol sowie 1,1,1-Tri-(4-hydroxyphenyl)-ethan (THPE) und Bis-(3-methyl-4-hydroxyphenyl)-2-oxo-2,3-dihydroindol eingesetzt.

Durch den Einsatz dieser Verzweiger ergeben sich verzweigte Strukturen. Die resultierende Langkettenverzweigung führt in der Regel zu einer Strukturviskosität im Vergleich zu linearen Typen.

Die Menge an einzusetzendem Kettenabbrecher beträgt vorzugsweise 0,5 Mol-% bis 10 Mol-%, bevorzugt 1 Mol-% bis 8 Mol-%, besonders bevorzugt 2 Mol-% bis 6 Mol-%, bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 gewichtsprozentig).

Zur Gewinnung hochmolekularer Copolycarbonate nach dem Schmelzumesterungsverfahren werden Diphenole mit Kohlensäurediestern, meist Diphenylcarbonat, in Anwesenheit von Katalysatoren, wie Alkalisalzen, Ammonium- oder Phosphoniumverbindungen, und gegebenenfalls weiteren Zusatzstoffen in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Kohlensäurediester im Sinne der Erfindung sind solche der Formeln (5) und (6) 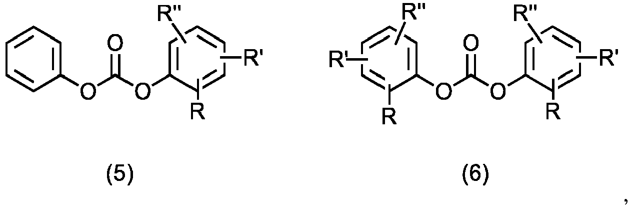 wobei
R, R' und R" unabhängig voneinander H, gegebenenfalls verzweigte C₁- bis C₃₄-Alkylreste/Cycloalkylreste, C₇- bis C₃₄-Alkarylreste oder C₆- bis C₃₄-Arylreste darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenylphenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenylphenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenylphenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)-carbonat Tritylphenyl-phenylcarbonat, Di-Tritylphenylcarbonat,
bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat. Es können auch Mischungen der genannten Kohlensäurediester eingesetzt werden.

Der Anteil an Kohlensäureestern beträgt 100 bis 130 mol-%, bevorzugt 103 bis 120 mol-%, besonders bevorzugt 103 bis 109 mol-%, bezogen auf die ein oder mehreren Diphenole.

Als Katalysatoren werden im Schmelzeumesterungsverfahren, wie in der genannten Literatur beschrieben, basische Katalysatoren wie beispielsweise Alkali- und Erdalkalihydroxide und -oxide, aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (7) 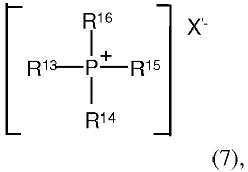 wobei
- R¹³⁻¹⁶: dieselben oder verschiedene C₁- bis C₁₀-Alkylreste, C₆- bis C₁₀-Arylreste, C₇- bis C₁₀-Aralkylreste oder C₅- bis C₆-Cycloalkylreste sein können, bevorzugt Methylrest oder C₆- bis C₁₄-Arylrest, besonders bevorzugt ein Methylrest oder Phenylrest, und
- X'-: ein Anion wie Hydroxid, Sulfat, Hydrogensulfat, Hydrogencarbonat, Carbonat, ein Halogenid, bevorzugt Chlorid, oder ein Alkoholat der Formel OR¹⁷ sein kann, wobei R¹⁷ ein C₆- bis C₁₄-Arylrest oder C₇- bis C₁₂-Aralkylrest, bevorzugt Phenylrest, sein kann.

Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Diphenol, Kohlensäurediester oder Monohydroxyarylverbindungen. Besonders bevorzugt sind Monohydroxyarylverbindungen, weil dem Fachmann geläufig ist, dass sich die Diphenole und Kohlensäurediester bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Das Verfahren zur Herstellung der Copolycarbonate nach dem Umesterungsverfahren kann diskontinuierlich oder auch kontinuierlich gestaltet werden. Nachdem die Diphenole und Kohlensäurediester, ggf. mit weiteren Verbindungen, als Schmelze vorliegen, wird in Gegenwart des Katalysators die Umsetzung gestartet. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Diphenol zu Kohlensäurediester und der durch Wahl der Verfahrensweise bzw. Anlage zur Herstellung des Polycarbonats gegebenen Verlustrate des Kohlensäurediesters über die Brüden und ggf. zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drücke und verwendeter Katalysatoren, um die Schmelzeumesterungsreaktion zwischen dem Diphenol und dem Kohlensäurediester, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess betragen im Allgemeinen 180 bis 330°C bei Drücken von 15 bar, absolut bis 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass ein oder mehrere Diphenole mit dem Kohlensäurediester, ggf. auch anderer zugesetzter Reaktanten unter Verwendung der Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventile miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber das feste Diphenol in der Kohlensäurediesterschmelze oder der feste Kohlensäurediester in der Schmelze des Diphenols gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze des Diphenols, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die relativen Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren bzw. Scheibenreaktoren kann auch in einem Korbreaktor bzw. Scheibenreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäß Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung eines Diphenols oder eines Kohlensäurediesters verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die fertigen Polycarbonate werden in der Regel mittels Zahnradpumpen, Schnecken unterschiedlichster Bauart oder Verdrängerpumpen spezieller Bauart gefördert.

Analog zum Phasengrenzflächenverfahren können mehrfunktionelle Verbindungen als Verzweiger eingesetzt werden.

Auch die Darstellung von Polysiloxan-Polycarbonat-Blockcopolymeren über das Phasengrenzflächenverfahren ist literaturbekannt und beispielsweise in US-PS 3 189 662, US-PS 3 419 634, DE-OS 3 34 782 und EP 0 122 535 beschrieben. Gleiches gilt für die Darstellung nach dem Schmelzumesterungsverfahren aus Bisphenol, Diarylcarbonat, silanolendterminierten Polysiloxanen und Katalysator, beschrieben in der US 5 227 449.

In dem erfindungsgemäßen Verfahren zur Herstellung dreidimensionaler Zielobjekte wird als Stützmaterial bevorzugt ein Copolycarbonat, welches aus 1,1-Bis(4-hydroxyphenyl)-3,3,5-trimethyl-cyclohexan (Bisphenol TMC) und 2,2-Bis(4-hydroxyphenyl)propan (Bisphenol A) gebildet ist, verwendet.

Als Druckmaterial werden ein Polyaryletherketon, insbesondere PEEK, ein Polyester, insbesondere PBT, ein Polyamid, insbesondere PA-12, ein PC/Polyester-Blend, vorzugsweise PC/PBT, insbesondere ein PC/PBT-Blend mit einem Polyester-Anteil von 15 bis 70 Gew.-%, besonders bevorzugt 30 bis 40 Gew-%, ganz besonders bevorzugt 30 bis 35 Gew.-%, und/oder PET, verwendet, besonders bevorzugt PBT oder ein Polyamid, wobei das Polyamid insbesondere PA-12 ist.

"Als Druckmaterial verwendet" umfasst nicht nur die Verwendung der reinen Polymere als solche, sondern auch von Polymer-Zusammensetzungen, die eines dieser Polymere als überwiegend vorhandene Komponente enthalten. Unter "überwiegend vorhanden" werden hierbei solche Zusammensetzungen verstanden, welche mindestens 50 Gew.-% des zuvor genannten Polymers, bevorzugt mindestens 60 Gew.-%, besonders bevorzugt mindestens 75 Gew.-%, ganz besonders bevorzugt mindestens 85 Gew.-% des zuvor genannten Polymers enthalten. Derartige Polymer-Zusammensetzungen enthalten üblicherweise noch übliche Additive.

Solche Additive, wie sie üblicherweise bei Polycarbonaten zugesetzt werden, sind insbesondere Antioxidantien, Entformungsmittel, Flammschutzmittel, UV-Absorber, IR-Absorber, Antistatika, optische Aufheller, Lichtstreumittel, Schlagzähmodifikatoren, Farbmittel wie organische oder anorganische Pigmente, thermisch leitfähige Additive, Thermostabilisatoren und/oder Additive zur Lasermarkierung in den für Polycarbonat üblichen Mengen, wie sie z.B. in EP-A 0 839 623, WO-A 96/15102, EP-A 0 500 496 oder im "Plastics Additives Handbook", Hans Zweifel, 5th Edition 2000, Hanser Verlag, München beschriebenen sind. Diese Additive können einzeln oder auch im Gemisch zugesetzt werden.

Die erfindungsgemäß eingesetzten Stützmaterialien lassen sich in aromatischen Kohlenwasserstoffen auflösen. Besonders gut eignen sich einfach- und mehrfach methylierte aromatische Kohlenwasserstoffe wie z.B. Toluol, Xylol und/oder Mesitylen. Außerdem können cyclische Ether wie z.B. Tetrahydrofuran (THF) zum Auflösen des Stützmaterials verwendet werden. Zum Auflösen des Stützmaterials können auch Lösungsmittelgemische, z.B. ein Lösungsmittelgemisch aus 2,5 bis 10 Gew.-% 1,3,5-Trimethylbenzol, 0,5 bis 2,5 Gew-% Cumol, 25 bis 50 Gew.-% 2-Methoxy-1-methylethylacetat, 10 bis 25 Gew.-% 1,2,4-Trimethylbenzol, < 0,5 Gew.-% 2-Methoxypropylacetat, 25 bis 50 Gew.-% Ethyl-3-ethoxypropionat und 10 bis 25 Gew.-% Naphtha; oder allgemein Lösungsmittel aus der Gruppe der aromatischen Kohlenwasserstoffe verwendet werden.

In Kombination mit den zuvor genannten, bevorzugt eingesetzten Stützmaterialien und den zuvor genannten, bevorzugt eingesetzten Druckmaterialien wird zum Auflösen des Stützmaterials bevorzugt Tetrahydrofuran, Xylol, Mesitylen, Cumol, Benzol, Toluol, Dioxan oder Tetrahydropyran, weiter bevorzugt Tetrahydrofuran oder Xylol, ganz besonders bevorzugt Tetrahydrofuran verwendet.

Die Auflösung des Stützmaterials erfolgt bevorzugt unter gegenüber Raumtemperatur erhöhter Temperatur.

Die Auflösung des Stützmaterials erfolgt bevorzugt unter Einwirkung von Ultraschall, da hierdurch der Auflöseprozess beschleunigt wird. Bevorzugt wird eine Kombination aus Ultraschall und erhöhter Temperatur verwendet.

Neben dem erfindungsgemäßen Verfahren ist Gegenstand der Erfindung auch ein Formteil, welches
a) eine Vielzahl von Schichten, enthaltend Copolycarbonat, enthaltend
   eine oder mehrere Monomereinheiten der Formeln (1a), (1b), (1c), (1d) 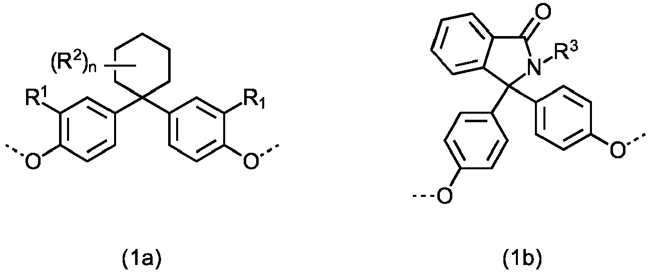 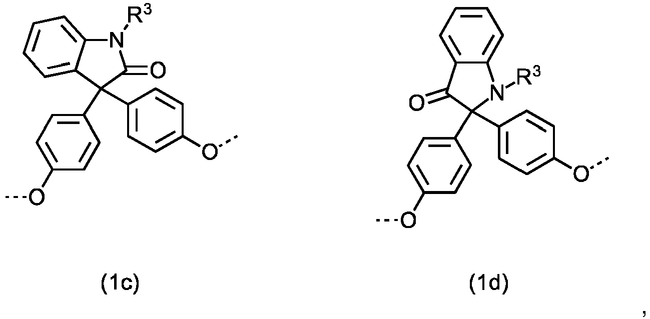 in denen
   R¹ für Wasserstoff oder einen C₁ - bis C₄-Alkylrest, bevorzugt für Wasserstoff, steht,
   R² für einen C₁ - bis C₄-Alkylrest, bevorzugt Methylrest, steht,
   n für 0, 1, 2 oder 3, bevorzugt 3, steht,
   R³ für einen C₁ - bis C₄-Alkylrest, Aralkylrest oder Arylrest, bevorzugt für einen Methylrest oder Phenylrest, ganz besonders bevorzugt für einen Methylrest, steht,
   und/oder der Formel (1e) 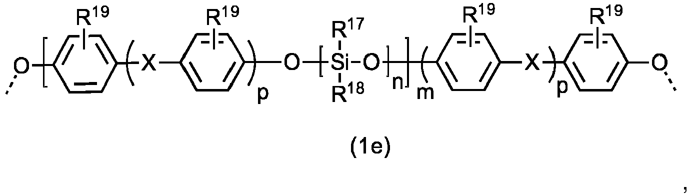 in der
      R¹⁹ für Wasserstoff, Cl, Br oder einen C₁ - bis C₄-Alkylrest, vorzugsweise für Wasserstoff oder einen Methylrest, und besonders bevorzugt für Wasserstoff, steht,
      R¹⁷ und R¹⁸ gleich oder verschieden sind und unabhängig voneinander für einen Arylrest, einen C₁ - bis C₁₀-Alkylrest oder einen C₁ - bis C₁₀-Alkylarylrest, bevorzugt jeweils für einen Methylrest, stehen und wobei
      X eine Einfachbindung, -CO-, -O-, ein C₁ - bis C₆-Alkylenrest, ein C₂- bis C₅-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, wobei X bevorzugt eine Einfachbindung, ein C₁ - bis C₅-Alkylenrest, ein C₂- bis C₅-Alkylidenrest, ein C₅- bis C₁₂-Cycloalkylidenrest, -O- oder -CO- ist, weiter bevorzugt eine Einfachbindung, ein Isopropylidenrest, ein C₅- bis C₁₂-Cycloalkylidenrest oder -O-ist, ganz besonders bevorzugt ein Isopropylidenrest, ist,
      n eine Zahl von 1 bis 500, vorzugsweise von 10 bis 400, besonders bevorzugt von 10 bis 100, ganz besonders bevorzugt von 20 bis 60, ist,
      m eine Zahl von 1 bis 10, bevorzugt von 1 bis 6, besonders bevorzugt von 2 bis 5, ist,
      p 0 oder 1, bevorzugt 1, ist,
      und der Wert von n mal m vorzugsweise zwischen 12 und 400, weiter bevorzugt zwischen 15 und 200, liegt,
      und
b) eine Vielzahl von Schichten, enthaltend ein Polyaryletherketon, insbesondere PEEK, einen Polyester, insbesondere PBT oder PET, ein Polyamid, insbesondere PA-12, und/oder ein PC/Polyester-Blend, insbesondere PC/PBT, aufweist,
   wobei die Vicat-Temperatur (VST/B120) des Copolycarbonats, bestimmt nach ISO 306:2013, mindestens 150°C, bevorzugt mehr als 150°C, weiter bevorzugt mindestens 175°C, besonders bevorzugt mindestens 200°C, beträgt.

Dieses Formteil ist ein Zwischenprodukt im Verfahren zur Herstellung des dreidimensionalen Zielobjektes, nämlich das Erzeugnis, das durch Drucken des Druckmaterials und des Stützmaterials erhalten wird und von dem in einem nächsten Schritt das Stützmaterial abzutrennen ist, vorzugsweise durch Auflösen.

### Beispiele

### 1. Beschreibung der Rohstoffe

- **PC1:**: ist ein kommerziell erhältliches Copolycarbonat auf Basis von Bisphenol A und Bisphenol TMC mit einem MVR von 18 cm³/10 min (330°C/2,16 kg, ISO 1133-1:2011) und einer Erweichungstemperatur (VST/B 120; ISO 306:2013) von 183°C (Apec® 1895 von Covestro Deutschland AG). Niedrigerer Bisphenol-TMC-Gehalt als PC2 und PC3.
- **PC2:**: ist ein kommerziell erhältliches Copolycarbonat auf Basis von Bisphenol A und Bisphenol TMC mit einem MVR von 8 cm³/10 min (330°C/2,16 kg, ISO 1133-1:2011) und einer Erweichungstemperatur (VST/B 120; ISO 306:2013) von 202°C (Apec® 2097 von Covestro Deutschland AG).
- **PC3:**: ist ein kommerziell erhältliches Copolycarbonat auf Basis von Bisphenol A und Bisphenol TMC mit einem MVR von 5 cm³/10 min (330°C/2,16 kg, ISO 1133-1:2011) und einer Erweichungstemperatur (VST/B 120; ISO 306:2013) von 218°C (Apec® DP1-9389 von Covestro Deutschland AG).
- **PC4:**: ist ein Copolycarbonat auf Basis von Bisphenol A und einem Siloxan mit der allgemeinen Strukturformel (1e), wobei R¹⁹ = H, X = Isopropyliden, R¹⁷ = R¹⁸ = Methylrest, p = 1, m = 3-4, n = 30 mit einem MVR von 25 cm³/10 min (320°C/2,16 kg, ISO 1133-1:2011) mit einer Erweichungstemperatur (VST/B 120; ISO 306:2013) < 150°C.
- **PC5**:: ist ein Copolycarbonat basierend auf Bisphenol A und Phthalimid (1c) mit R³ = Phenyl mit einer Erweichungstemperatur (VST/B 120; ISO 306:2013) > 165°C und kleiner 200°C.
- **PC6:**: ist ein Copolycarbonat basierend auf Bisphenol A und Phthalimid (1b) mit R³ = Methyl mit einer Erweichungstemperatur (VST/B 120; ISO 306:2013) > 165°C und kleiner 200°C.
- **PC7:**: ist ein kommerziell erhältliches Polycarbonat basierend auf Bisphenol A mit einer teilverzweigten Struktur mit einem MVR von 2 cm³/10 min (300°C/1,2 kg, ISO 1133-1:2011) und einer Erweichungstemperatur (VST/B 50; ISO 306:2013) von 150°C. (Makrolon® WB1239 von Covestro Deutschland AG).
- **PC8:**: ist ein Polycarbonat basierend auf Bisphenol A mit teilverzweigter Struktur mit einem MVR von 12,6 cm³/10 min (300°C/1,2 kg, ISO 1133-1:2011) und einer Erweichungstemperatur (VST/B 50; ISO 306:2013) von 142°C.
- **PC9:**: ist ein kommerziell erhältliches Copolycarbonat auf Basis von Bisphenol A und Bisphenol TMC mit einem MVR von 45 cm³/10 min (330°C/2,16 kg, ISO 1133-1:2011) und einer Erweichungstemperatur (VST/B 120; ISO 306:2013) von 158°C (Apec® 1695 von Covestro Deutschland AG).
- **PC10**:: ist ein kommerziell erhältliches Copolycarbonat auf Basis von Bisphenol A und Bisphenol TMC mit einem MVR von 24 cm³/10 min (330°C/2,16 kg, ISO 1133-1:2011) und einer Erweichungstemperatur (VST/B 120; ISO 306:2013) von 173°C (Apec® 1795 von Covestro Deutschland AG).
- **PLA:**: Polymilchsäure (poly lactic acid) ist ein kommerziell erhältliches thermoplastisches Polymer zum Einsatz im 3D Druck der Firma Orbi-Tech.
- **PBT:**: ist ein kommerziell erhältliches Polybutylenterephthalat der Firma Lanxess (PO-CAN B 1300).
- **PA-12:**: Polyamid-12 ist ein kommerziell erhältliches thermoplastisches Polymer zum Einsatz im 3D Druck mit einer empfohlenen Verarbeitungstemperatur von 270°C der Firma Orbi-Tech.
- **PC/PBT:**: ist ein kommerziell erhältliches Elastomer-modifiziertes Polycarbonat/Polybutylenterephthalat Blend auf Basis eines Bisphenol A basierten Polycarbonats und Polybutylenterephthalat mit einer MVR von 16 cm³/10 min (260°C/5 kg, ISO 1133-1:2011) und einer Erweichungstemperatur (VST/B 120; ISO 306:2013) von 125°C.
- **PET:**: ist ein kommerziell erhältliches Polyethylenterephthalat der Firma Invista (XPU-RE® Polyester 4004 / V004).
- **PC:**: ist ein kommerziell erhältliches Polycarbonat auf Basis von Bisphenol mit einer MVR von 19 cm³/10 min (300°C/1,2 kg, ISO 1133-1:2011) und einer Erweichungstemperatur (VST/B 120; ISO 306:2013) von 148°C (Makrolon® 2408 von Covestro Deutschland AG).
- **PC/ABS:**: ist ein kommerziell erhältliches Polycarbonat/Acrylnitril-Butadien-Styrol Blend mit einer MVR von 18 cm³/10 min (260°C/5 kg, ISO 1133-1:2011) und einer Erweichungstemperatur (VST/B 120; ISO 306:2013) von 130°C (Bayblend® T85XF von Covestro Deutschland AG).
- **PC/ABS**: **FR:** ist ein kommerziell erhältliches, flammgeschütztes Polycarbonat/Acrylnitril-Butadien-Styrol Blend mit einer MVR von 18 cm³/10 min (260°C/5 kg, ISO 1133-1:2011) und einer Erweichungstemperatur (VST/B 120; ISO 306:2013) von 136°C (Bayblend® FR 3311TV von Covestro Deutschland AG).
- **ABS:**: ist ein Terpolymer, bestehend aus den Monomeren Acrylnitril, 1,3-Butadien und der Firma Ineos Styrolution Europe GmbH (Terluran® HI-10).
- **Durabio:**: Ist ein bioabbaubares Polycarbonat auf Basis von Isosorbit der Firma Mitsubishi Chemical.
- **PEEK:**: Ist ein kommerziell erhältliches Polyetheretherketon der Firma alt-intech.
- **Xylol:**: Isomerengemisch aus o-, m- und para-Xylol, ≥98.5 Gew.-%, erhältlich von Sigma-Aldrich.
- **THF:**: Tetrahydrofuran, ≥99.9 Gew.-%, erhältlich von Sigma-Aldrich.
- **MIBK:**: Methylisobutylketon, ≥98.5 Gew.-%, erhältlich von Sigma-Aldrich.
- **E3EP:**: Ethyl-3-ethoxypropionat, 99 Gew.-%, erhältlich von Sigma-Aldrich.
- **Lsm.-Gemisch:**: Ein Lösungsmittelgemisch aus 5 Gew.-% 1,3,5-Trimethylbenzol (Mesitylen), 2,5 Gew.-% Cumol, 30 Gew.-% 2-Methoxy-1-methylethylacetat, 15 Gew.-% 1,2,4-Trimethylbenzol, 30 Gew.-% Ethyl-3-Ethoxypropionat und 17,5 Gew.-% Naphta.

### 2. Versuchsdurchführung

Es wurde eine Untersuchung der Löslichkeit von verschiedenen Druck-/Stützmaterial-Kombinationen in verschiedenen Lösungsmitteln bei Raumtemperatur durchgeführt (Tabelle 1). Dazu wurde jeweils ein Materialmusterplättchen (ca. 1,0 x 1,0 x 0,2 cm, 0,3 g) des potentiellen Druckmaterials (PLA, PBT, PA-12, PC/PBT, PC/ABS, PET, PC, ABS, Durabio, PEEK) mit einem Musterplättchen (ca. 1,0 x 1,0 x 0,2 cm, 0.3 g) des Stützmaterials (Polycarbonatcopolymer; Polycarbonat) verklebt. Die Verklebung der Materialien erfolgte durch Applikation eines Tropfens Methylenchlorid zwischen die Musterplättchen. Nach ausreichender Trocknung des verklebten Teils wurden die Muster für 24 h in 10 mL Lösungsmittel eingelegt. Anschließend wurde das Ergebnis ausgewertet (sowohl qualitativ als auch quantitativ durch Auswiegen vorher und nachher). Obwohl beim klassischen 3D-Druck eine Adhäsion der einzelnen Lagen untereinander thermisch induziert wird, sollte die Verklebung der Musterplättchen durch Lösungsmittel eine Situation unter erschwerten Bedingungen simulieren. Durch den Einfluss des Lösungsmittels gehen Druck- und Stützmaterial eine wesentlich stärkere Bindung miteinander ein, da davon auszugehen ist, dass beide Materialien partiell gelöst werden und sich die beiden Polymere an der Verbindungsstelle stärker verzahnen. Ein Ablösen voneinander kann unter diesen Bedingungen nur durch ausreichendes Auflösen des Stützmaterials gelingen. In diesem Fall ist ein Ablösen des Stützmaterials im späteren gedruckten Teil bei lediglich thermischer Verklebung wesentlich leichter zu erzielen.

In einer weiteren Versuchsreihe wurden stichprobenartig einige Copolycarbonat/Druckmaterial-Kombinationen Lösungsversuchen bei erhöhter Temperatur unterzogen (Tabelle 2). In Tabelle 2 ist die bei dem jeweiligen Lösungsmittel verwendete Temperatur nebst der Zeit zur vollständigen Auflösung des Stützmaterials angegeben.

Es wurde außerdem eine Versuchsreihe durchgeführt (Tabelle 3), bei welcher zusätzlich Ultraschall eingesetzt wurde. Die Lösungsversuche wurden bei Raumtemperatur gestartet. Während des Auflösevorganges erhöhte sich die Temperatur aufgrund des Energieeintrags durch Ultraschall auf eine Endtemperatur des THFs von ca. 35 °C und des Xylols auf etwa 35 bis 50 °C.

Alle eingesetzten Copolycarbonate lassen sich zudem als Stützmaterialien drucken.

### 3. Ergebnisse

**Tabelle 1a: Verhalten von Druck- und Stützmaterial unter Lösungsmitteleinfluss**

| | **PC1** | | | | | **PC2** | | | **PC3** | | |
|---|---|---|---|---|---|---|---|---|---|---|---|
| | **Xylol** | **THF** | **Lsm.-Gemisch** | **MiBK** | **E3EP** | **Xylol** | **THF** | **Lsm.-Gemisch** | **Xylol** | **THF** | **Lsm.-Gemisch** |
| **PLA** | 1b | 1c | 2b | 2b | 2b | 1b | 1c | 1b | 1b | 1c | 1b |
| **PBT** | 1a | 1a | 2a | 2a | 2a | 1a | 1a | 1a | 1a | 1a | 1a |
| **PA-12** | 1a | 1a | 1a | - | - | 1a | 1a | 1a | 1a | 1a | 1a |
| **PC/PBT** | 1a | 1a | 1a | - | - | 1a | 1a | 1a | 2a | 1a | 1a |
| **PET** | 1a | 1a | 1a | - | - | 2a | 1a | 1a | 1a | 1a | 1a |
| **PC** | 1c | 1c | 2c | 2c | 2c | 1c | 2c | 1c | 1c | 1c | 1b |
| **ABS** | 1c | 1c | 2c | 2c | 2c | 1c | 1c | 1c | 1c | 1c | 1c |
| **PC/ABS** | 1c | 1c | 1c | - | - | 1c | 1c | 1c | 1c | 1c | 1c |
| **PC/ABS FR** | 1c | 1c | 1c | - | - | 1c | 1c | 1c | 1c | 1c | 1c |
| **Durabio D5380AR** | 2c | 1c | 2c | 2a | 2a | 1c | 1c | 1c | 1c | 1c | 1c |
| **Durabio D7340AR** | 2c | 1c | 2c | 2a | 2a | 1c | 1c | 1a | 1c | 1c | 1a |
| **PEEK** | 2a | 2a | 1a | - | - | 1a | 1a | 1a | 1a | 1a | 1a |

| | | | | | | | | | | | |
|---|---|---|---|---|---|---|---|---|---|---|---|
| **Erläuterung: Stützmaterialien in der ersten Zeile der Tabelle, Druckmaterialien in der ersten Spalte der Tabelle.** [1] Stützmaterial vollständig aufgelöst; [2] Stützmaterial nach 24 h unvollständig aufgelöst; [3] Stützmaterial nicht aufgelöst; [a] Druckmaterial unversehrt und formstabil; [b] Druckmaterial eingetrübt, aber formstabil; [c] Druckmaterial zerstört (z.B. rissig, versprödet, zerfallen, angelöst) ; -: nicht untersucht | | | | | | | | | | | |

**Tabelle 1b: Verhalten von Druck- und Stützmaterial unter Lösungsmitteleinfluss**

| | **PC4** | | | **PC5** | | **PC6** | |
|---|---|---|---|---|---|---|---|
| | **Xylol** | **THF** | **Lsm.-Gemisch** | **Xylol** | **THF** | **Xylol** | **THF** |
| **PLA** | 3b | 1c | 3b | 3b | 1c | 3b | 1c |
| **PBT** | 3a | 1a | 3a | 3a | 1a | 3a | 1a |
| **PA-12** | 3a | 1a | 3a | 3a | 1a | 3a | 1a |
| **PC/PBT** | 3a | 1a | 3a | 3a | 1a | 3a | 1a |
| **PET** | 3a | 1a | 3a | 3a | 1a | 3a | 1a |
| **PC/ABS** | 3c | 1c | - | 3c | 3c | 3c | 3c |
| **PC/ABS FR** | 3c | 1c | - | 3c | 3c | 3c | 3c |

| | | | | | | | |
|---|---|---|---|---|---|---|---|
| **Erläuterung: Stützmaterialien in der ersten Zeile der Tabelle, Druckmaterialien in der ersten Spalte der Tabelle.** [1] Stützmaterial vollständig aufgelöst; [2] Stützmaterial nach 24 h unvollständig aufgelöst; [3] Stützmaterial nicht aufgelöst; [a] Druckmaterial unversehrt und formstabil; [b] Druckmaterial eingetrübt, aber formstabil; [c] Druckmaterial zerstört (z.B. rissig, versprödet, zerfallen, angelöst) ; -: nicht untersucht | | | | | | | |

**Tabelle lc: Verhalten von Druck- und Stützmaterial unter Lösungsmitteleinfluss**

| | **PC7** | | | **PC8** | | |
|---|---|---|---|---|---|---|
| | **Xylol** | **THF** | **Lsm.-Gemisch** | **Xylol** | **THF** | **Lsm.-Gemisch** |
| **PC** | 3c | 3c | 3c | 3c | 2c | 3c |

| | | | | | | |
|---|---|---|---|---|---|---|
| **Erläuterung: Stützmaterialien in der ersten Zeile der Tabelle, Druckmaterialien in der ersten Spalte der Tabelle.** [1] Stützmaterial vollständig aufgelöst; [2] Stützmaterial nach 24 h unvollständig aufgelöst; [3] Stützmaterial nicht aufgelöst; [a] Druckmaterial unversehrt und formstabil; [b] Druckmaterial eingetrübt, aber formstabil; [c] Druckmaterial zerstört (z.B. rissig, versprödet, zerfallen, angelöst) ; -: nicht untersucht | | | | | | |

**Tabelle 1d: Verhalten von Druck- und Stützmaterial unter Lösungsmitteleinfluss**

| | **PC9** | | | **PC10** | | |
|---|---|---|---|---|---|---|
| | **Xylol** | **Lsm.-Gemisch** | **THF** | **Xylol** | **Lsm.-Gemisch** | **THF** |
| **PBT** | 3a | 2a | 1a | 3a | 3a | 1a |
| **PA-12** | 3a | 2a | 1a | 3a | 3a | 1a |
| **PC/PBT** | 3a | 2a | 1a | 3a | 3a | 1a |
| **PET** | 3a | 3a | 1a | 3a | 3a | 1a |
| **PC** | 3c | 2c | 1c | 3c | 3b | 1c |
| **ABS** | 3c | 2c | 1c | 3c | 3c | 1c |
| **PC/ABS** | 3c | 2c | 1c | 3c | 3c | 1c |
| **PC/ABS FR** | 3c | 2c | 1c | 3c | 3c | 1c |
| **Durabio D5380AR** | 3c | 2c | 1c | 3c | 3c | 1c |
| **Durabio D7340AR** | 3c | 2c | 1c | 3c | 3a | 1c |
| **PEEK** | 3a | 2a | 1a | 3a | 3a | 1a |

| | | | | | | |
|---|---|---|---|---|---|---|
| **Erläuterung: Stützmaterialien in der ersten Zeile der Tabelle, Druckmaterialien in der ersten Spalte der Tabelle.** [1] Stützmaterial vollständig aufgelöst; [2] Stützmaterial nach 24 h unvollständig aufgelöst; [3] Stützmaterial nicht aufgelöst; [a] Druckmaterial unversehrt und formstabil; [b] Druckmaterial eingetrübt, aber formstabil; [c] Druckmaterial zerstört (z.B. rissig, versprödet, zerfallen, angelöst) ; -: nicht untersucht PC4 löst sich in den meisten Lösungsmitteln nicht vollständig auf, zerfällt allerdings in kleine Stücke und lässt sich so vom Druckmaterial abtrennen (Beurteilung "1"). | | | | | | |

Kombinationen mit der Beurteilung "2c" (z.B. ABS als Druckmaterial und PC1 als Stützmaterial, Lösungsmittel MIBK) sind nicht geeignet, da sowohl das Druckmaterial im gewählten Lösungsmittel zerstört wird als auch das Stützmaterial gar nicht oder nur unvollständig aufgelöst werden konnte.

Kombinationen mit einer "1a" Beurteilung hingegen eignen sich hervorragend, da sich das Stützmaterial im gewählten Lösungsmittel komplett auflösen lässt und das Druckmaterial unversehrt zurückbleibt. Beispiele besonders geeigneter Kombinationen Druckmaterial/Stützmaterial sind gemäß Tabelle 1 z.B. PEEK+PC2, PBT+PC2, PC/PBT+PC2 oder PA-12+PC3 (und weitere). Die Wahl des Lösungsmittels hat einen entscheidenden Einfluss auf die Eignung von Kombinationen. Das Lösungsmittelgemisch ist zwar zum Auflösen von Copolymeren (PC2, PC3) mit hohem BPA-TMC-Gehalt geeignet, versagt aber bei PC1 (Beurteilung "2").

Gemäß den Ergebnissen ist eine besonders geeignete Kombination: PEEK oder PC/PBT als Druckmaterial und PC2 als Stützmaterial, wenn zum späteren Auflösen des Stützmaterials THF oder Xylol gewählt wird.

Insbesondere PEEK und PC1 bis PC3, d.h. die erfindungsgemäß einzusetzenden Copolycarbonate mit Monomereinheiten der Formel (1a), weisen eine sehr ähnliche Verarbeitungstemperatur auf und haben alle eine besonders hohe Stabilität bei Langzeittemperaturbelastung. Viele weitere gute Kombinationen lassen sich in der Tabelle identifizieren. Gute Kombinationen wurden anschließend bei erhöhter Temperatur bzw. Ultraschall getestet und die Zeit zum Auflösen des Stützmaterials untersucht (Tabelle 2 und Tabelle 3).

Das Polycarbonat-Homopolymer eignet sich weder als Druck- noch als Stützmaterial, da es beim Lösevorgang rissig und spröde wird, sich jedoch nicht auf- oder ablöst. Ebenso sind die Copolycarbonate PC8 und PC9, die eine teilverzweigte Struktur aufweisen, als Stützmaterialien ungeeignet. Sie lösen sich in den getesteten Lösungsmitteln nicht auf bzw. weisen lediglich eine Trübung und Versprödung auf.

Einzig das Copolycarbonat PC7 zeigt ein gutes Lösungsverhalten in THF und moderates Lösungsverhalten in Xylol. Im Vergleich zu PC2 löst es sich allerdings wesentlich langsamer auf.

**Tabelle 2: Verhalten von Druck- und Stützmaterial unter Lösungsmitteleinfluss bei erhöhter Temperatur. Zeit bis zum vollständigen Auflösen des Stützmaterials.**

| | **PC2** | | **PC3** | |
|---|---|---|---|---|
| | **Xylol** (75-80°C) | **THF** (50°C) | **Xylol** (75-80°C) | **THF** (50°C) |
| **PBT** | 90 min | 75 min | 45 min | 25 min |
| **PA-12** | 60 min | 60 min | 35 min | 25 min |
| **PC/PBT** | 110 min | 70 min | 45 min | 35 min |
| **PET** | 95 min | 75 min | 50 min | 35 min |
| **PEEK** | 40 min | 30 min | 50 min | 35 min |

| | | | | |
|---|---|---|---|---|
| Versuchsparameter: THF = 50°C; Xylol = 75-80°C; Ergebnisse als Mittelwert aus Doppelbestimmung. | | | | |

**Tabelle 3: Verhalten von Druck- und Stützmaterial unter Lösungsmitteleinfluss bei durch Ultraschall steigender Temperatur. Zeit bis zum vollständigen Auflösen des Stützmaterials.**

| | **PC2** | | | **PC3** | | |
|---|---|---|---|---|---|---|
| | **Xylol** | **THF** | **Lsm.-Gemisch** | **Xylol** | **THF** | **Lsm.-Gemisch** |
| **PBT** | 30 min | 15 min | 120 min | 15 min | 15 min | 45 min |
| **PA-12** | 30 min | 20 min | 120 min | 20 min | 15 min | 80 min |
| **PC/PBT** | 20 min | 20 min | 85 min | 15 min | 15 min | 90 min |
| **PET** | 30 min | 15 min | 120 min | 15 min | 15 min | 80 min |
| **PEEK** | 30 min | 20 min | - | 15 min | 20 min | - |

| | | | | | | |
|---|---|---|---|---|---|---|
| Ergebnisse als Mittelwert aus Doppelbestimmung. | | | | | | |

Aus den durchgeführten Versuchen hat sich ergeben, dass PEEK, PBT, PA-12, PC/PBT und PET grundsätzlich geeignete Druckmaterialien sind, welche mit Bisphenol-TMC basierten Copolycarbonaten oder den anderen eingesetzten hochtemperaturstabilen Copolycarbonaten als Stützmaterial im 3D-Druck verwendet werden können, und dass THF, Xylol oder das Lsm.-Gemisch, insbesondere THF und/oder Xylol, als Lösungsmittel geeignet sind, um die Bisphenol-TMC basierten Copolymere aufzulösen. Unter Verwendung dieser Lösungsmittel lässt sich das jeweilige Copolycarbonat rückstandslos auflösen. Dabei dauerte es in der Regel bei Raumtemperatur bis zu 24 h, bis das Stützmaterial komplett in Lösung gegangen war oder es sich soweit aufgelöst hatte, dass eine Ablösung vom Druckmaterial erfolgte.

Neben einer Verklebung der Probenplättchen aus Druckmaterial und Stützmaterial mit Hilfe von Methylenchlorid wurden diese auch mittels Temperatur verklebt. Dazu wurde jeweils eines der beiden Materialien mit einem Heißluftgebläse kurzzeitig auf ca. 400 °C erhitzt und beide Probenplättchen wurden anschließend bis zur Abkühlung aneinandergepresst. Die untersuchten Lösungseigenschaften wurden anschließend analog zu obigen Versuchen untersucht. Es zeigte sich für die angegebenen Kombinationen das gleiche Lösungsverhalten.

Die Untersuchung der Löslichkeit der verschiedenen Druckmaterial/Stützmaterial-Kombinationen bei erhöhter Temperatur (Tabelle 2) hat ergeben, dass hierdurch nicht nur eine Steigerung der Auflösungsgeschwindigkeit des Stützmaterials erfolgt, sondern dass überraschenderweise das Druckmaterial nicht angegriffen wird. Bei einer erhöhten Temperatur von 50 °C lösten sich sowohl PC2 als auch PC3 innerhalb von maximal 75 min auf. Mit höherem Anteil Bisphenol-TMC (PC3 gegenüber PC2) im Copolycarbonat konnte eine Steigerung der Auflösungsgeschwindigkeit beobachtet werden.

Wie aus Tabelle 3 ersichtlich, führt eine Ultraschallbehandlung während des Löseprozesses des Stützmaterials zu einer deutlichen Steigerung der Auflösegeschwindigkeit. Ein Einfluss der Ultraschallbehandlung auf das Druckmaterial konnte nicht festgestellt werden.

## Patentansprüche

1. Verfahren zur Herstellung eines dreidimensionalen Zielobjektes mittels Fused Deposition Modeling unter Verwendung eines Stützmaterials, wobei ein Lösungsmittel zum Entfernen des Stützmaterials verwendet wird, **dadurch gekennzeichnet, dass** als Stützmaterial eine Zusammensetzung auf Basis eines Copolycarbonats verwendet wird, welches eine Vicat-Temperatur (VST/B120), bestimmt nach ISO 306:2013, von mindestens 150°C aufweist,
und wobei
das Copolycarbonat eine oder mehrere Monomereinheiten
der Formel (1a), 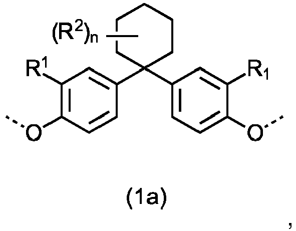 in der
R¹ für Wasserstoff oder einen C₁-bis C₄-Alkylrest steht,
R² für einen C₁- bis C₄-Alkylrest steht,
n für 0, 1, 2 oder 3 steht,
(1b), (1c) und/oder (1d) 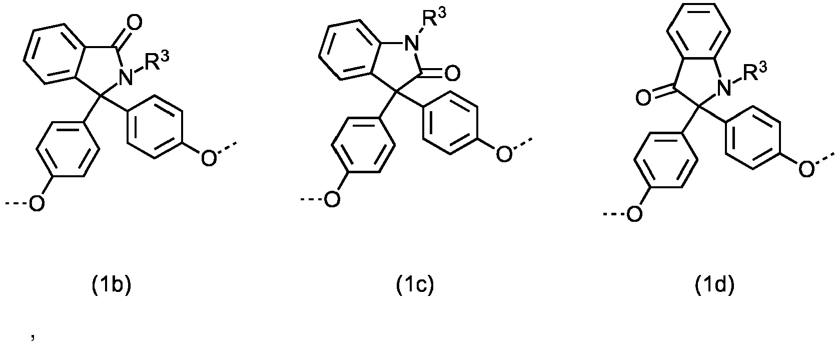 in denen
R³ für einen C₁- bis C₄-Alkylrest, Aralkylrest oder Arylrest steht, und/oder
der Formel (1e) 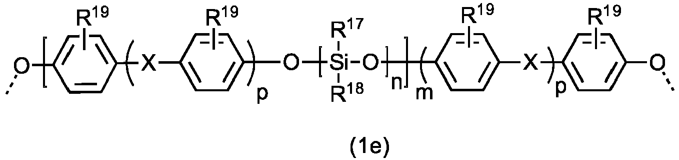 in der
R¹⁹ für Wasserstoff, Cl, Br oder einen C₁- bis C₄-Alkylrest steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest stehen und wobei
X eine Einfachbindung, -CO-, -O-, ein C₁- bis C₆-Alkylenrest, ein C₂- bis C₅-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, ist,
n eine Zahl von 1 bis 500 ist,
m eine Zahl von 1 bis 10 ist,
p 0 oder 1 ist,
enthält,
und wobei als Druckmaterial ein Polyester, ein Polyamid, ein PC/Polyester-Blend und/oder ein Polyaryletherketon verwendet wird.
und wobei THF zum Entfernen des Stützmaterials verwendet wird, wenn die Vicat-Temperatur (VST/B120), bestimmt nach ISO 306:2013, unter 175°C beträgt und/oder ein Copolycarbonat mit Monomereinheiten der Formeln (1b), (1c), (1d) und/oder (1e) verwendet wird.

2. Verfahren nach Anspruch 1, **dadurch gekennzeichnet, dass** das Copolycarbonat eine oder mehrere Monomereinheiten der Formel (1a) 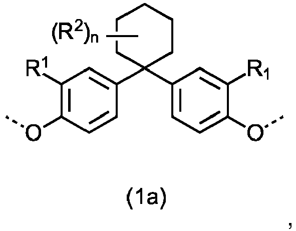 in der
R¹ für Wasserstoff oder einen C₁-bis C₄-Alkylrest steht,
R² für einen C₁- bis C₄-Alkylrest steht,
n für 0, 1, 2 oder 3 steht;
enthält.

3. Verfahren nach einem der vorhergehenden Ansprüche, **dadurch gekennzeichnet, dass** das Copolycarbonat aus den Monomeren 1,1-Bis(4-hydroxyphenyl)-3,3,5-trimethylcyclohexan und 2,2-Bis(4-hydroxyphenyl)propan hergestellt ist.

4. Verfahren nach einem der vorhergehenden Ansprüche, **dadurch gekennzeichnet, dass** das Copolycarbonat eine Vicat-Temperatur (VST/B120), bestimmt nach ISO 306:2013, von mindestens 200°C aufweist.

5. Verfahren nach einem der vorhergehenden Ansprüche, **dadurch gekennzeichnet, dass** das Copolycarbonat eine oder mehrere Monomereinheiten der Formel (1b), (1c) und/oder (1d) 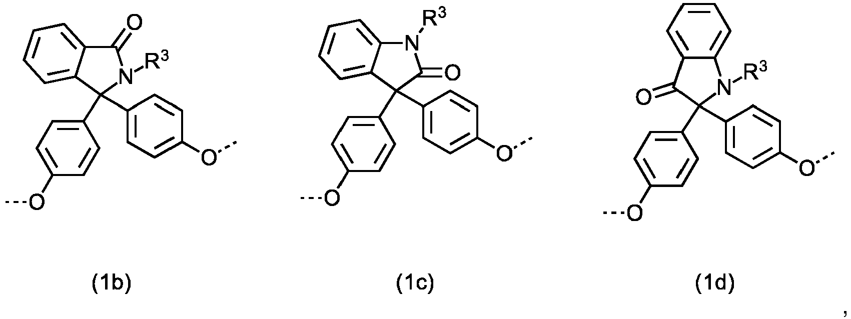 in denen
R³ für einen C₁- bis C₄-Alkylrest, Aralkylrest oder Arylrest steht,
enthält und THF als Lösungsmittel zum Entfernen des Stützmaterials verwendet wird.

6. Verfahren nach einem der vorhergehenden Ansprüche, **dadurch gekennzeichnet, dass** das Copolycarbonat eine oder mehrere Monomereinheiten der Formel (1e) 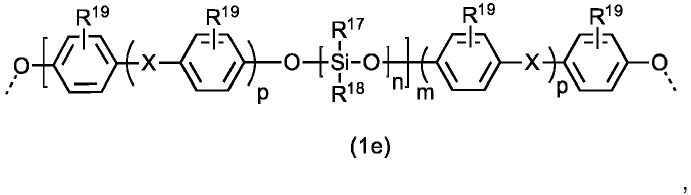 in der
R¹⁹ für Wasserstoff, Cl, Br oder einen C₁- bis C₄-Alkylrest steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest stehen und wobei
X eine Einfachbindung, -CO-, -O-, ein C₁- bis C₆-Alkylenrest, ein C₂- bis C₅-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, ist,
n eine Zahl von 1 bis 500 ist,
m eine Zahl von 1 bis 10 ist,
p 0 oder 1 ist,
enthält und THF als Lösungsmittel zum Entfernen des Stützmaterials verwendet wird.

7. Verfahren gemäß einem der vorhergehenden Ansprüche, **dadurch gekennzeichnet, dass** das Stützmaterial bei einer Lösungsmitteltemperatur von 50 bis 80°C entfernt wird.

8. Verfahren gemäß einem der vorhergehenden Ansprüche, **dadurch gekennzeichnet, dass** die Entfernung des Stützmaterials unter Einwirkung von Ultraschall erfolgt.

9. Verfahren gemäß einem der vorhergehenden Ansprüche, **dadurch gekennzeichnet, dass** als Druckmaterial ein Material verwendet wird, welches eine Verarbeitungstemperatur von mindestens 330°C aufweist.

10. Formteil, welches
a) eine Vielzahl von Schichten, enthaltend Copolycarbonat, enthaltend
eine oder mehrere Monomereinheiten der Formeln (1a), (1b), (1c), (1d) 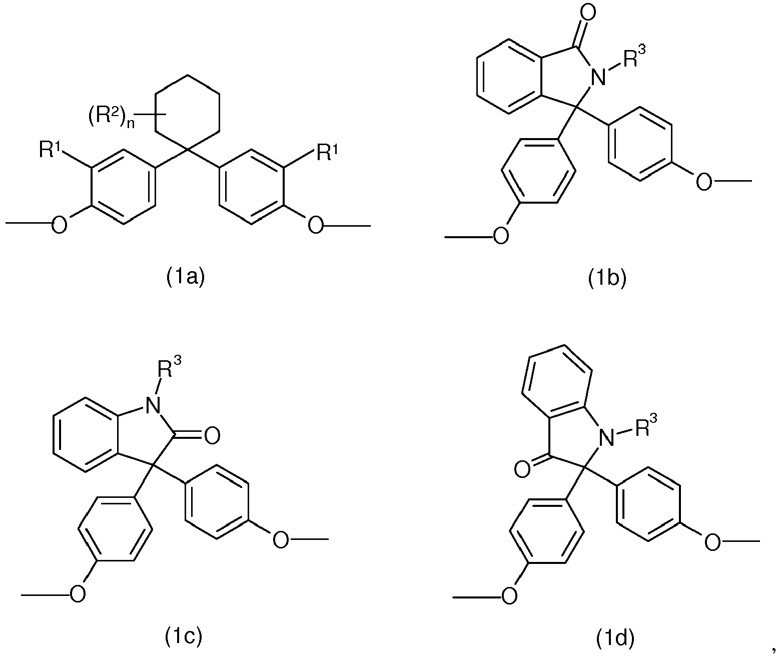 in denen
R¹ für Wasserstoff oder einen C₁- bis C₄-Alkylrest steht,
R² für einen C₁- bis C₄-Alkylrest steht,
n für 0, 1, 2 oder 3 steht,
R³ für einen C₁- bis C₄-Alkylrest, Aralkylrest oder Arylrest steht,
und/oder eine oder mehrere der Monomereinheiten (1e) 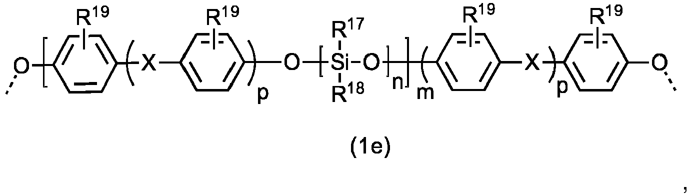 in der
R¹⁹ für Wasserstoff, Cl, Br oder einen C₁- bis C₄-Alkylrest steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest, stehen und wobei
X eine Einfachbindung, -CO-, -O-, ein C₁- bis C₆-Alkylenrest, ein C₂- bis C₅-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, ist,
n eine Zahl von 1 bis 500 ist,
m eine Zahl von 1 bis 10 ist,
p 0 oder 1 ist,
und
b) eine Vielzahl von Schichten, enthaltend ein Polyester, ein Polyamid, ein PC/Polyester-Blend und/oder ein Polyaryletherketon, aufweist.

11. Verfahren nach einem der Ansprüche 1 bis 9 oder Formteil nach Anspruch 10, wobei der Polyester des Druckmaterials ein PBT und/oder ein PET ist.

## Claims

1. Process for producing a three-dimensional target object by means of fused deposition modeling using a support material, wherein a solvent is used to remove the support material, **characterized in that** the support material used is a composition based on a copolycarbonate having a Vicat temperature (VST/B120), determined according to ISO 306:2013, of at least 150°C,
and wherein
the copolycarbonate contains one or more monomer units
of the formula (1a) 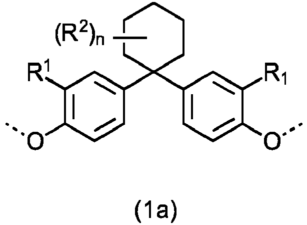 in which
R¹ is hydrogen or a C₁- to C₄-alkyl radical,
R² is a C₁- to C₄-alkyl radical,
n is 0, 1, 2 or 3,
(1b), (1c) and/or (1d) 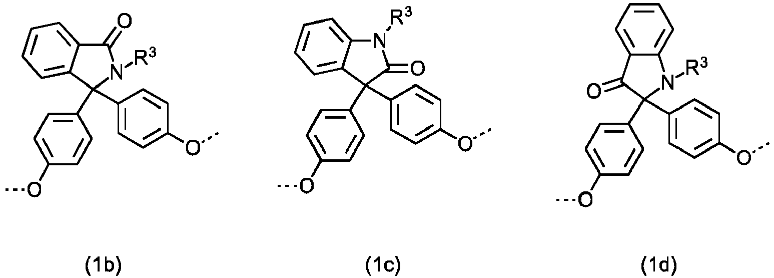 in which
R³ is a C₁- to C₄-alkyl radical, aralkyl radical or aryl radical,
and/or
of the formula (1e) 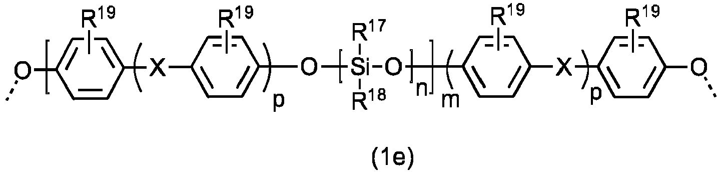 in which
R¹⁹ is hydrogen, Cl, Br or a C₁- to C₄-alkyl radical,
R¹⁷ and R¹⁸ are the same or different and are each independently an aryl radical, a C₁- to C₁₀-alkyl radical or a C₁- to C₁₀-alkylaryl radical, and where
X is a single bond, -CO-, -O-, a C₁- to C₆-alkylene radical, a C₂- to C₅-alkylidene radical, a C₅- to C₁₂-cycloalkylidene radical or a C₆- to C₁₂-arylene radical, which may optionally be fused to further aromatic rings containing heteroatoms,
n is a number from 1 to 500,
m is a number from 1 to 10,
p is 0 or 1,
and wherein the print material used is a polyester, a polyamide, a PC/polyester blend and/or a polyaryl ether ketone,
and wherein THF is used to remove the support material when the Vicat temperature (VST/B120), determined according to ISO 306:2013, is below 175°C and/or a copolycarbonate having monomer units of the formulae (1b), (1c), (1d) and/or (1e) is used.

2. Process according to Claim 1, **characterized in that** the copolycarbonate contains one or more monomer units of the formula (1a) 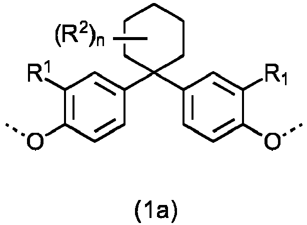 in which
R¹ is hydrogen or a C₁- to C₄-alkyl radical,
R² is a C₁- to C₄-alkyl radical,
n is 0, 1, 2 or 3.

3. Process according to either of the preceding claims, **characterized in that** the copolycarbonate has been prepared from the monomers 1,1-bis(4-hydroxyphenyl)-3,3,5-trimethylcyclohexane and 2,2-bis(4-hydroxyphenyl)propane.

4. Process according to any of the preceding claims, **characterized in that** the copolycarbonate has a Vicat temperature (VST/B120), determined according to ISO 306:2013, of at least 200°C.

5. Process according to any of the preceding claims, **characterized in that** the copolycarbonate contains one or more monomer units of the formula (1b), (1c) and/or (1d) 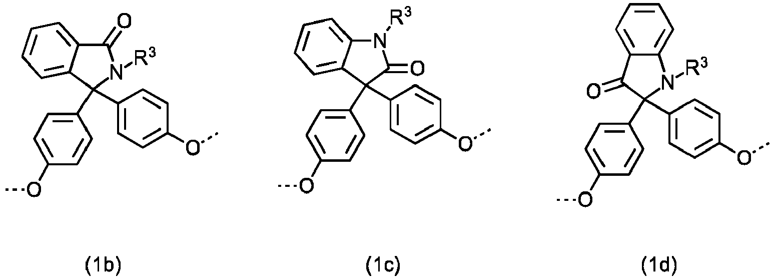 in which
R³ is a C₁- to C₄-alkyl radical, aralkyl radical or aryl radical,
and THF is used as solvent for removal of the support material.

6. Process according to any of the preceding claims, **characterized in that** the copolycarbonate contains one or more monomer units of the formula (1e) 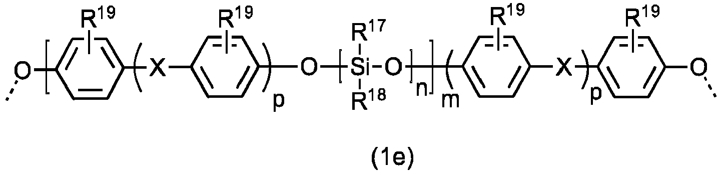 in which
R¹⁹ is hydrogen, Cl, Br or a C₁- to C₄-alkyl radical, R¹⁷ and R¹⁸ are the same or different and are each independently an aryl radical, a C₁- to C₁₀-alkyl radical or a C₁- to C₁₀-alkylaryl radical, and where X is a single bond, -CO-, -O-, a C₁- to C₆-alkylene radical, a C₂- to C₅-alkylidene radical, a C₅- to C₁₂-cycloalkylidene radical or a C₆- to C₁₂-arylene radical, which may optionally be fused to further aromatic rings containing heteroatoms,
n is a number from 1 to 500,
m is a number from 1 to 10,
p is 0 or 1,
and THF is used as solvent for removal of the support material.

7. Process according to any of the preceding claims, **characterized in that** the support material is removed at a solvent temperature of 50 to 80°C.

8. Process according to any of the preceding claims, **characterized in that** the support material is removed under the action of ultrasound.

9. Process according to any of the preceding claims, **characterized in that** the print material used is a material having a processing temperature of at least 330°C.

10. Shaped article having
a) a multitude of layers comprising copolycarbonate, comprising
one or more monomer units of the formulae (1a), (1b), (1c), (1d) 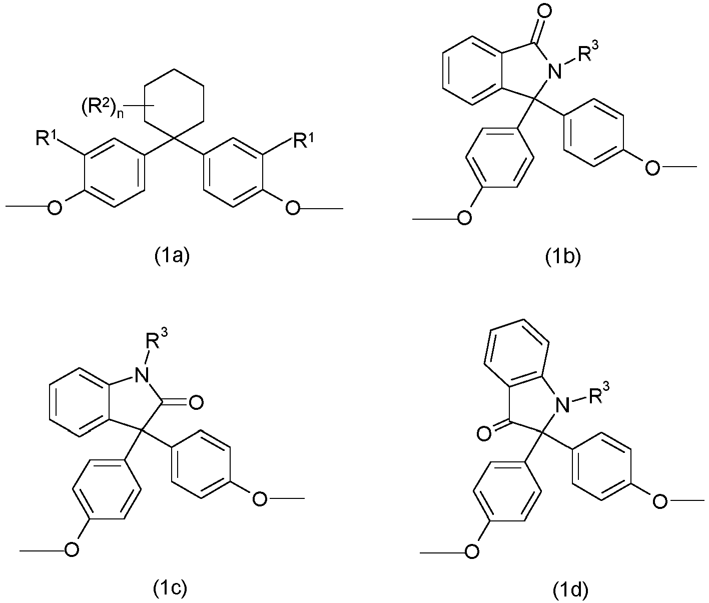 in which
R¹ is hydrogen or a C₁- to C₄-alkyl radical,
R² is a C₁- to C₄-alkyl radical,
n is 0, 1, 2 or 3,
R³ is a C₁- to C₄-alkyl radical, aralkyl radical or aryl radical,
and/or one or more of the monomer units (1e) 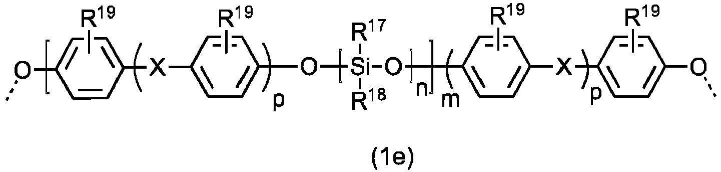 in which
R¹⁹ is hydrogen, Cl, Br or a C₁- to C₄-alkyl radical, R¹⁷ and R¹⁸ are the same or different and are each independently an aryl radical, a C₁- to C₁₀-alkyl radical or a C₁- to C₁₀-alkylaryl radical, and where X is a single bond, -CO-, -O-, a C₁- to C₆-alkylene radical, a C₂- to C₅-alkylidene radical, a C₅- to C₁₂-cycloalkylidene radical or a C₆- to C₁₂-arylene radical, which may optionally be fused to further aromatic rings containing heteroatoms,
n is a number from 1 to 500,
m is a number from 1 to 10,
p is 0 or 1,
and
b) a multitude of layers comprising a polyester, a polyamide, a PC/polyester blend and/or a polyaryl ether ketone.

11. Process according to any of Claims 1 to 9 or shaped article according to Claim 10, wherein the polyester of the print material is a PBT and/or a PET.

## Revendications

1. Procédé pour la préparation d'un objet cible tridimensionnel au moyen de Fused Deposition Modeling (modélisation par dépôt en fusion) avec l'utilisation d'un matériau de support, un solvant étant utilisé pour éliminer le matériau de support, **caractérisé en ce qu'**en tant que matériau de support, une composition à base d'un copolycarbonate est utilisée, qui présente une température Vicat (VST/B120), déterminée selon la norme ISO 306:2013, d'au moins 150 °C,
et le copolycarbonate contient un ou plusieurs motifs monomériques
de formule (1a), 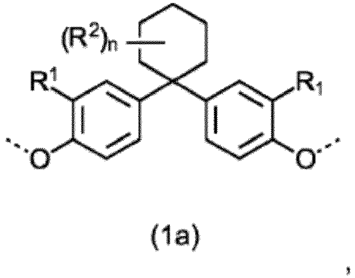 dans laquelle
R¹ représente hydrogène ou un radical C₁₋₄-alkyle,
R² représente un radical C₁₋₄-alkyle,
n représente 0, 1, 2 ou 3,
(1b), (1c) et/ou (1d) 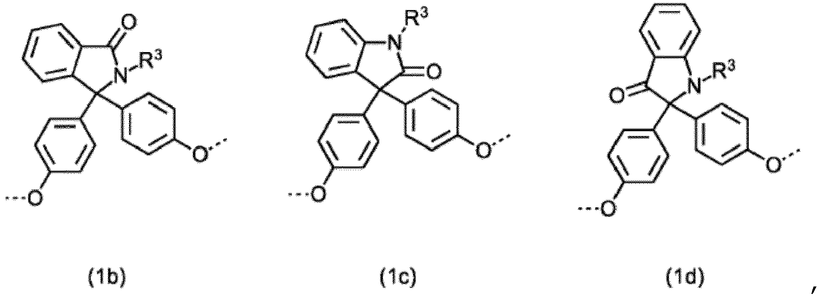 dans lesquelles
R³ représente un radical C₁₋₄-alkyle, un radical aralkyle ou un radical aryle,
et/ou
de formule (1e) 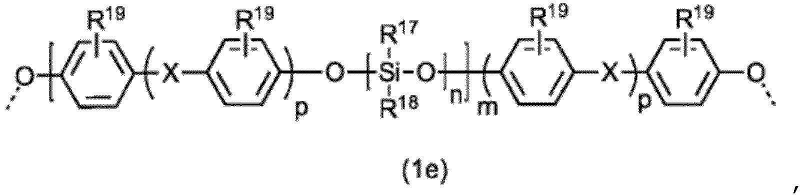 dans laquelle
R¹⁹ représente hydrogène, Cl, Br ou un radical C₁₋₄-alkyle,
R¹⁷ et R¹⁸ sont identiques ou différents et représentent indépendamment les uns des autres un radical aryle, un radical C₁₋₁₀-alkyle ou un radical C₁₋₁₀-alkylaryle et
X est une simple liaison, -CO-, -O-, un radical C₁₋₆-alkylène, un radical C₂₋₅-alkylidène, un radical C₅₋₁₂-cycloalkylidène ou un radical C₆₋₁₂-arylène, qui peut éventuellement être condensé avec des cycles aromatiques supplémentaires, qui contiennent des hétéroatomes,
n est un nombre de 1 à 500,
m est un nombre de 1 à 10,
p est 0 ou 1,
et un polyester, un polyamide, un mélange PC/polyester et/ou une polyaryléthercétone étant utilisé(e) en tant que matériau d'impression,
et du THF étant utilisé pour éliminer le matériau de support, lorsque la température Vicat (VST/B120), déterminée selon la norme ISO 306:2013, est inférieure à 175 °C
et/ou un copolycarbonate comportant des motifs monomériques des formules (1b), (1c), (1d) et/ou (le) est utilisé.

2. Procédé selon la revendication 1, **caractérisé en ce que** le copolycarbonate contient un ou plusieurs motifs monomériques de formule (1a) 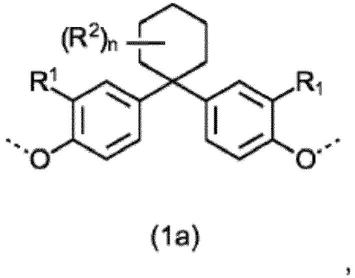 dans laquelle
R¹ représente hydrogène ou un radical C₁₋₄-alkyle,
R² représente un radical C₁₋₄-alkyle,
n représente 0, 1, 2 ou 3.

3. Procédé selon l'une quelconque des revendications précédentes, **caractérisé en ce que** le copolycarbonate est préparé à partir des monomères 1,1-bis(4-hydroxyphényl)-3,3,5-triméthylcyclohexane et 2,2-bis(4-hydroxyphényl)propane.

4. Procédé selon l'une quelconque des revendications précédentes, **caractérisé en ce que** le copolycarbonate présente une température Vicat (VST/B120), déterminée selon la norme ISO 306:2013, d'au moins 200 °C.

5. Procédé selon l'une quelconque des revendications précédentes, **caractérisé en ce que** le copolycarbonate contient un ou plusieurs motifs monomériques de formule (1b), (1c) et/ou (1d) 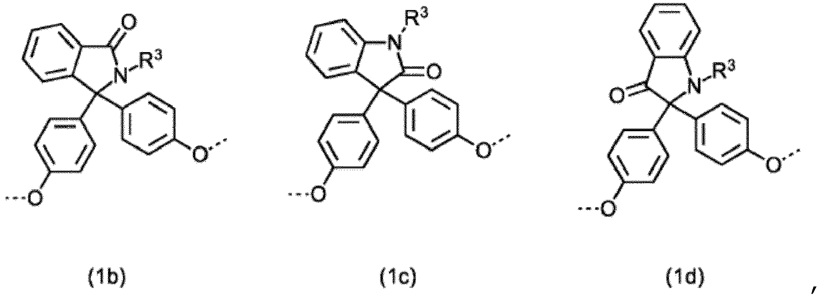 dans lesquelles
R³ représente un radical C₁₋₄-alkyle, un radical aralkyle ou un radical aryle,
et du THF est utilisé en tant que solvant pour l'élimination du matériau de support.

6. Procédé selon l'une quelconque des revendications précédentes, **caractérisé en ce que** le copolycarbonate contient un ou plusieurs motifs monomériques de formule (le) 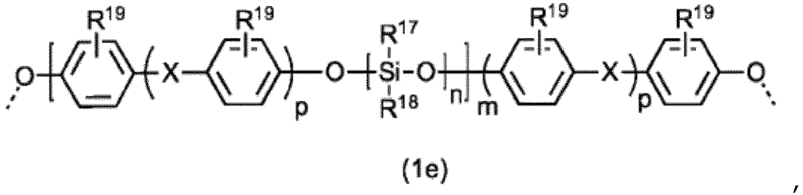 dans laquelle
R¹⁹ représente hydrogène, Cl, Br ou un radical C₁₋₄-alkyle,
R¹⁷ et R¹⁸ sont identiques ou différents et représentent indépendamment les uns des autres un radical aryle, un radical C₁₋₁₀-alkyle ou un radical C₁₋₁₀-alkylaryle et
X est une simple liaison, -CO-, -O-, un radical C₁₋₆-alkylène, un radical C₂₋₅-alkylidène, un radical C₅₋₁₂-cycloalkylidène ou un radical C₆₋₁₂-arylène, qui peut éventuellement être condensé avec des cycles aromatiques supplémentaires, qui contiennent des hétéroatomes,
n est un nombre de 1 à 500,
m est un nombre de 1 à 10,
p est 0 ou 1,
et du THF est utilisé en tant que solvant pour l'élimination du matériau de support.

7. Procédé selon l'une quelconque des revendications précédentes, **caractérisé en ce que** le matériau de support est éliminé à une température de solvant de 50 à 80 °C.

8. Procédé selon l'une quelconque des revendications précédentes, **caractérisé en ce que** l'élimination du matériau de support a lieu sous l'action d'ultrasons.

9. Procédé selon l'une quelconque des revendications précédentes, **caractérisé en ce qu'**en tant que matériau d'impression, un matériau est utilisé qui présente une température de traitement d'au moins 330 °C.

10. Pièce moulée, qui présente
a) une pluralité de couches, contenant un copolycarbonate, contenant un ou plusieurs motifs monomériques des formules (1a), (1b), (1c), (1d) 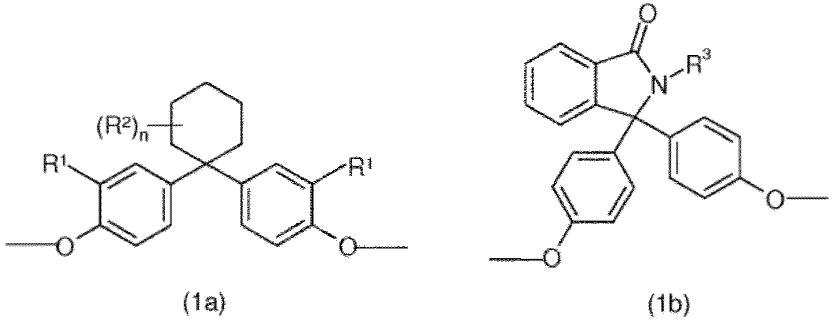 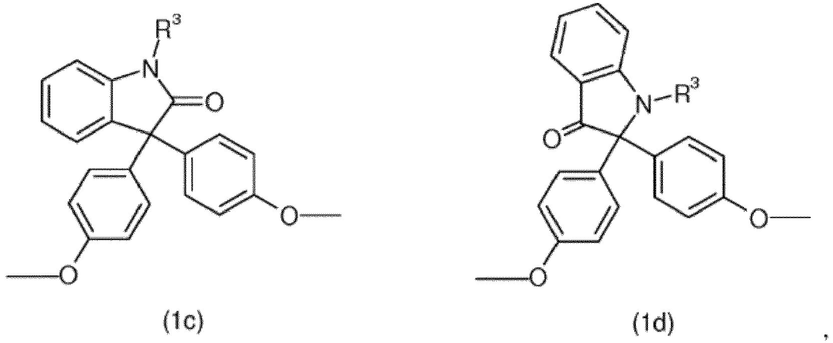 dans lesquelles
R¹ représente hydrogène ou un radical C₁₋₄-alkyle,
R² représente un radical C₁₋₄-alkyle,
n représente 0, 1, 2 ou 3,
R³ représente un radical C₁₋₄-alkyle, un radical aralkyle ou un radical aryle,
et/ou un ou plusieurs motifs monomériques (1e) 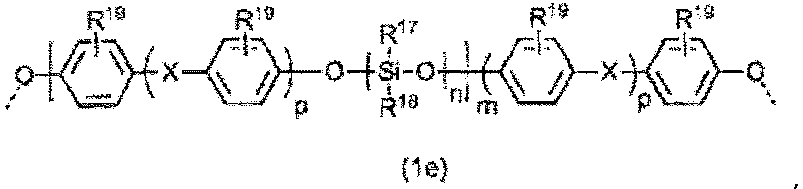 dans laquelle
R¹⁹ représente hydrogène, Cl, Br ou un radical C₁₋₄-alkyle,
R¹⁷ et R¹⁸ sont identiques ou différents et représentent indépendamment les uns des autres un radical aryle, un radical C₁₋₁₀-alkyle ou un radical C₁₋₁₀-alkylaryle et
X est une simple liaison, -CO-, -O-, un radical C₁₋₆-alkylène, un radical C₂₋₅-alkylidène, un radical C₅₋₁₂-cycloalkylidène ou un radical C₆₋₁₂-arylène, qui peut éventuellement être condensé avec des cycles aromatiques supplémentaires, qui contiennent des hétéroatomes,
n est un nombre de 1 à 500,
m est un nombre de 1 à 10,
p est 0 ou 1,
et
b) une pluralité de couches, contenant un polyester, un polyamide, un mélange PC/polyester et/ou une polyaryléthercétone.

11. Procédé selon l'une quelconque des revendications 1 à 9 ou pièce moulée selon la revendication 10, le polyester du matériau d'impression étant un PBT et/ou un PET.
